# EUROPEAN PATENT SPECIFICATION

(11) **EP 4 359 694 B1**
(45) Date of publication and mention of the grant of the patent: **05.08.2026**
(21) Application number: 22744822.2
(22) Date of filing: 23.06.2022
(51) Int. Cl.: F17C 13/04

(54) **MULTIFUNCTION VALVE FOR FUEL CELL AUTOMOTIVE SYSTEMS**
MULTIFUNKTIONSVENTIL FÜR BRENNSTOFFZELLEN-KRAFTFAHRZEUGSYSTEME
SOUPAPE MULTIFONCTION POUR SYSTÈMES AUTOMOBILES À PILE À COMBUSTIBLE

(30) Priority: 25.06.2021 IT 202100016742
(43) Date of publication of application: 01.05.2024
(73) Proprietor: OMB Saleri S.p.A. - Societa' Benefit, 25126 Brescia (IT)
(72) Inventor: MONDINELLI, Francesco, 25126 Brescia (IT); BERARDI, Mario, 25126 Brescia (IT); MORELLI, Giacomo, 25126 Brescia (IT)
(74) Representative: Pulieri, Gianluca Antonio
(86) International application number: PCT/IB2022/055822
(87) International publication number: WO 2022/269527

(56) References cited:
- DE-A1- 102017 004 261
- US-A1- 2016 273 492
- US-B2- 10 955 091

## Description

The present invention relates to the field of valves for fuel cell automotive systems, and in particular to the field of valves for managing the flow of hydrogen between a tank and the fuel cells. In particular, a multifunction valve intended to be applied to the tank, usually referred to as an OTV (On-Tank-Valve), forms the subject matter of the present invention.

In a fuel cell vehicle system, hydrogen is stored in a high pressure tank, typically 700 or 350 bars. A multifunction valve is applied to the neck of the tank, which allows for the introduction of hydrogen into the tank (refilling function) and the release of hydrogen towards the downstream user devices (fueling function). Specifically, hydrogen delivery is regulated by an electrically controlled solenoid valve (SOV valve). Document US10955091B2 discloses an example of a multifunction valve for a high-pressure hydrogen tank of an automotive fuel cell system.

A multifunction valve further comprises some safety devices, such as a temperature sensor, for detecting the temperature of the gas in the tank, and a thermal safety device, able to abruptly vent the hydrogen contained in the tank in case of hazardous events, such as, for example, a fire.

The Applicant has long produced and sold, with considerable market appreciation, an OTV valve having the aforesaid features.

The SOV valve is a crucial component for the proper functioning of the OTV valve and must be properly preserved. In particular, the Applicant has noted the need to preserve this valve during refilling operations, which occur in the presence of high hydrogen inflow rates and, consequently, considerable flows striking the parts of the SOV valve.

The object of the present invention is to provide a multifunction valve which meets the needs of the field and at the same time overcomes the aforementioned drawbacks.

Such an object is achieved by an OTV valve according to the appended claim 1. The dependent claims describe additional advantageous embodiments of the invention.

The features and advantages of the OTV valve according to the present invention will become apparent from the following description, given by way of nonlimiting example in accordance with the figures in the accompanying drawings, wherein:

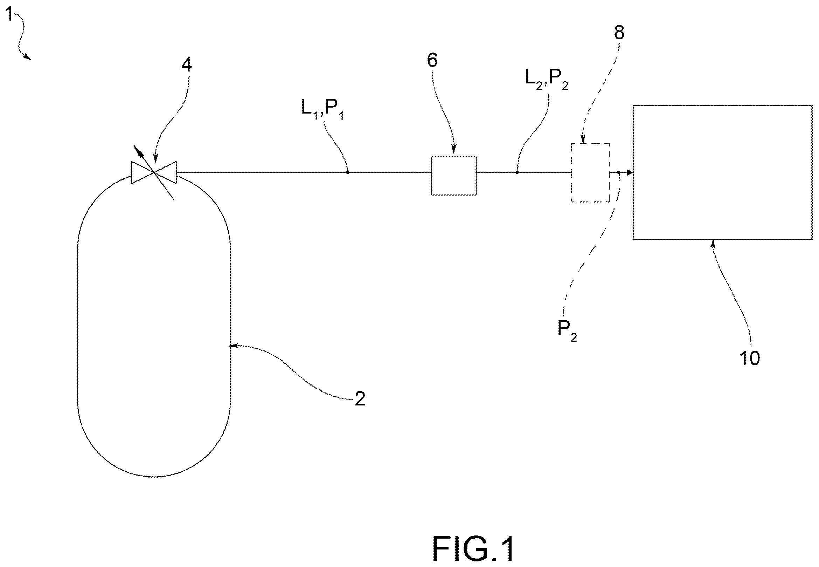

- Fig. 1 schematically depicts a fuel cell automotive system comprising an OTV valve according to the present invention;

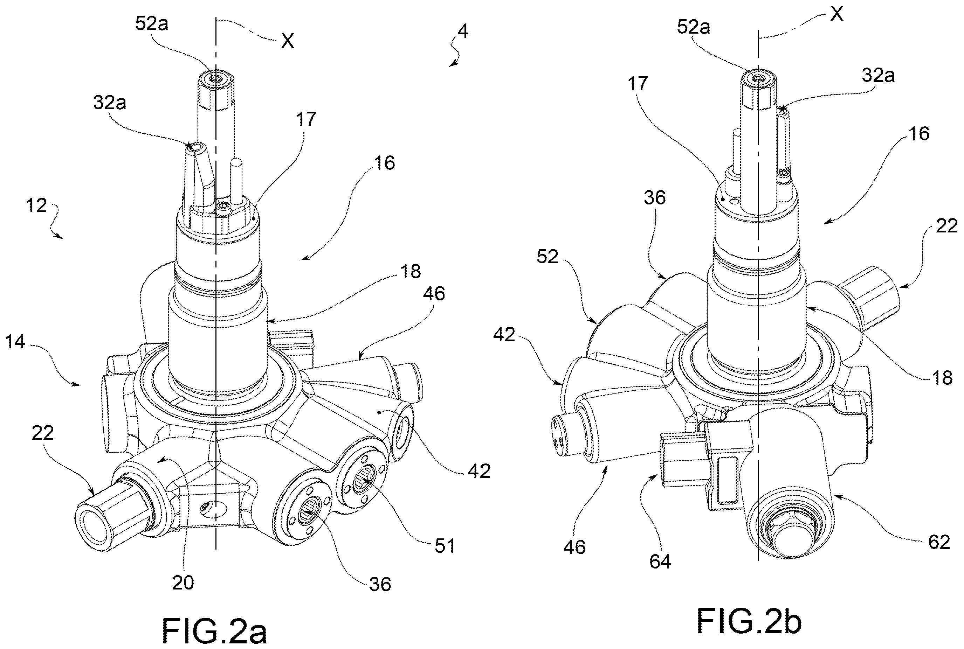

- Fig. 2a and 2b show the OTV valve according to an embodiment of the present invention;

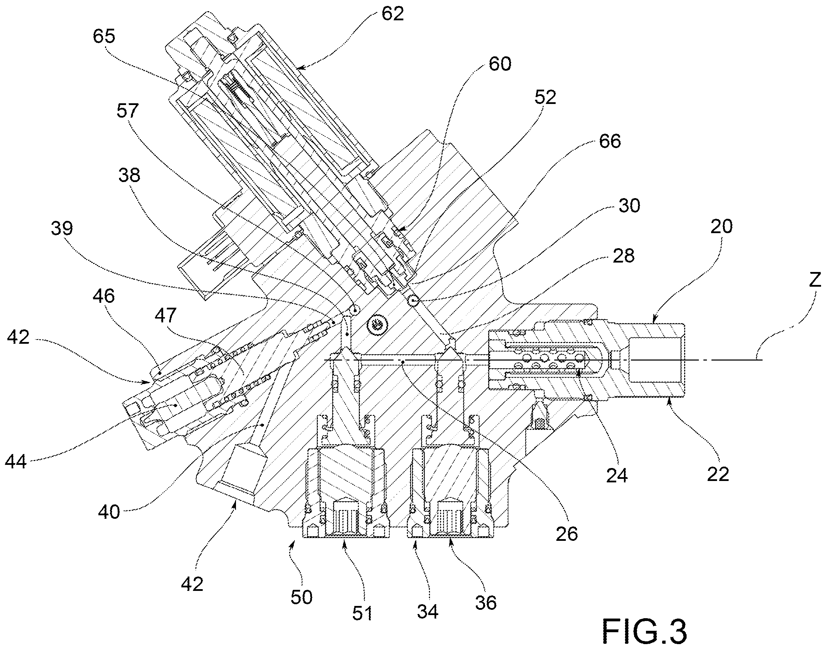

- Fig. 3 is a cross section of the OTV valve from Fig. 2a and 2b;

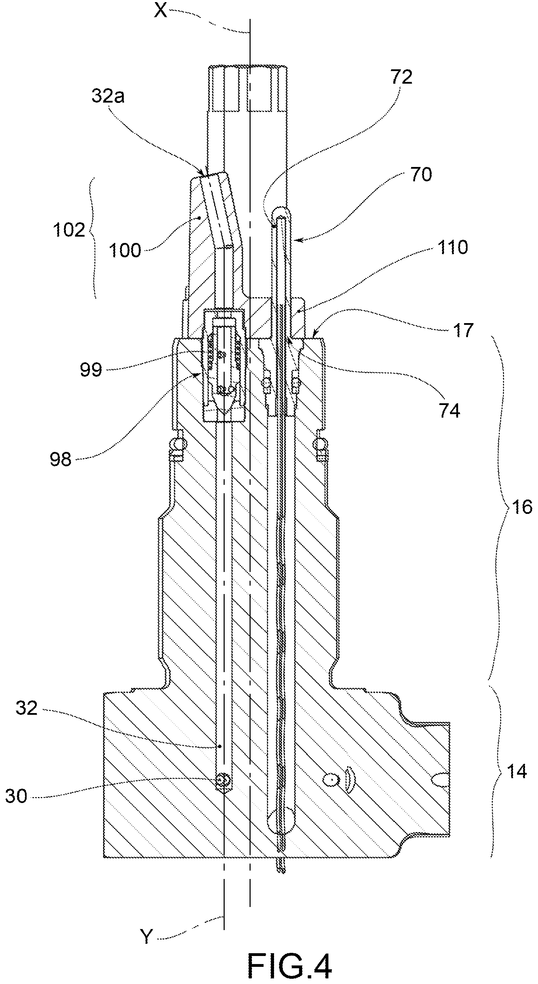

- Fig. 4 is a longitudinal section of the OTV valve from Fig. 2a and 2b;

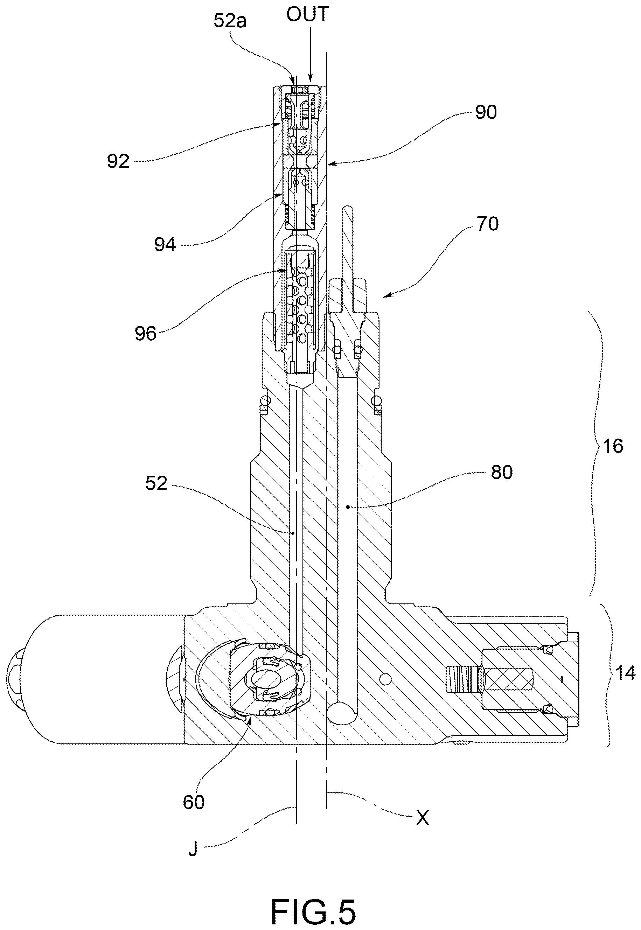

- Fig. 5 is a further longitudinal section of the OTV valve from Fig. 2a and 2b;

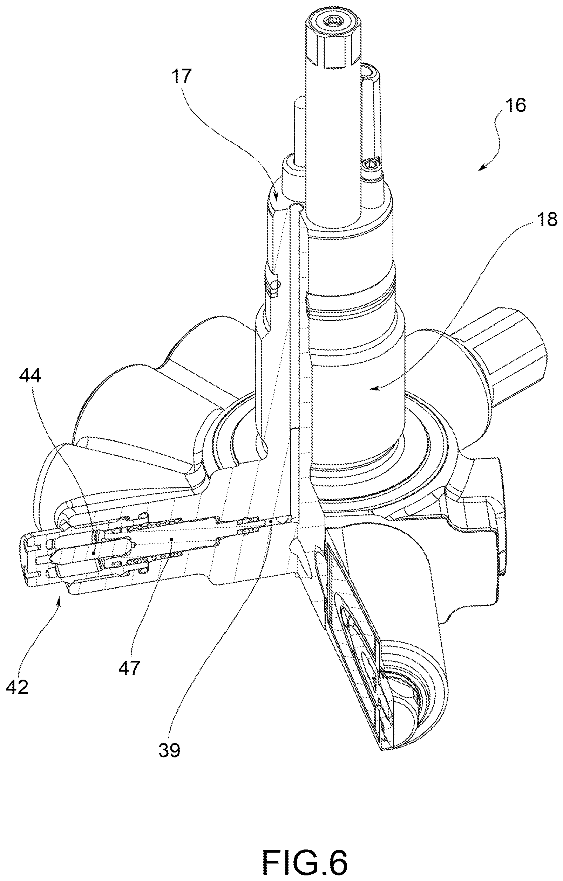

- Fig. 6 depicts the partially sectioned OTV valve;
- Fig. 7 depicts schematically the OTV valve according to an embodiment of the present invention in a step of fueling the downstream devices;
- Fig. 8 depicts schematically the OTV valve according to an embodiment of the present invention in a refilling step;

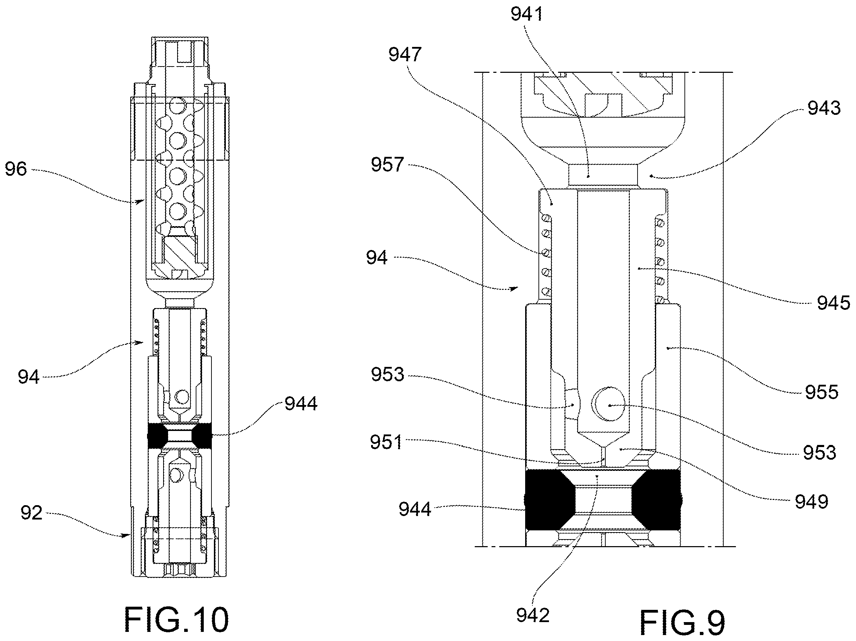

- Fig. 9 shows a flow limiting valve according to an embodiment of the present invention;
- Fig. 10 illustrates the flow limiting valve, an excess flow valve and a filter, according to an embodiment of the present invention.

With reference to the appended figures, 1 has been used to collectively denote a fuel cell automotive system comprising a tank 2 for containing high-pressure hydrogen (the maximum pressure may reach 350, 700, or even 1000 bars), a multifunction valve 4 (OTV valve) applied to a flange of the tank 2, a pressure-reducing valve 6 (HPR valve), a high pressure line L1 with high pressure P1, connecting the OTV valve 4 to the HPR valve 6, a fuel cell assembly 10, and a low pressure line L2 with low pressure P2, connecting the HPR valve 6 to the fuel cell assembly 10. Preferably, the system 1 comprises accessory valves 8 that intercept the low pressure line L2.

The OTV valve 4 comprises a valve body 12, for example made in one piece, usually of aluminum, comprising a main portion 14 and a connection portion 16. The connection portion 16 extends predominantly along a connection axis X and has, at one end distal from the main portion 14, a head surface 17, for example lying on an imaginary plane orthogonal to the connection axis X. Typically, the head surface 17 is circular.

The connection portion 16 comprises an engagement section 18, having a cylindrical outer surface coaxial to the connection axis X, threaded for screwing into the flange hole of the tank 2.

Preferably, the main portion 14 has its predominant extension on an imaginary plane, orthogonal to the main axis X.

According to one embodiment, the main portion 14 provides an inlet/outlet port 20, intended for the inlet of hydrogen and the outlet of hydrogen towards downstream devices; preferably, an inlet/outlet fitting 22 is inserted into the inlet/outlet port 20, for example, provided with an inlet/outlet filter 24. The main body 14 also has an internal inlet/outlet conduit 26 in communication with the inlet/outlet port 20.

Preferably, moreover, the main portion 14 has internally an inlet/outlet branch 28 branching off from the inlet/outlet conduit 26 and is in turn in communication, via an inlet port 30, with an outlet conduit 32 having extension along an outlet axis Y, preferably parallel to and spaced away from the connection axis X, terminating in an outlet end port 32a.

The OTV valve 4 is also equipped with a first manually operated, normally open shut-off valve 34 (MV valve) operating between the inlet/outlet conduit 26 and the inlet/outlet branch 28. The MV valve 34 operable externally, usually manually, through a first inlet 36 on the main portion 14. When the MV valve 34 is closed, access from the inlet/outlet conduit 26 to the inlet/outlet branch 28 is closed.

Preferably, moreover, the main portion 14 has an internal by-pass port 38, branching off from the inlet/outlet conduit 26, downstream of the MV valve 34, a vent conduit 39, into which the internal by-pass conduit 38 flows, and a vent end conduit 40, communicating with the external environment via a vent port 42 of the main portion 14.

Preferably, moreover, the OTV valve 4 comprises a second, normally closed, shut-off valve 50 (BV valve), operable externally, usually manually, by means of a third inlet 51 on the main portion 14, operating between the inlet/outlet conduit 26 and the internal by-pass conduit 38. Normally, therefore, the access from the inlet/outlet conduit 26 to the internal by-pass conduit 38 is closed by the BV valve 50.

Preferably, the BV valve 50 is placed downstream of the MV valve 34, along the inlet/outlet conduit 26, and said MV valve 34 is configured so that, when closed, it still leaves the passage to the BV valve 50 free.

According to a preferred embodiment, the OTV valve 4 is also equipped with a thermal safety device 42 (TPRD device) arranged in the main portion 14. For example, the TPRD device 42 is equipped with a breakable bulb 44, insertable through a second port 46 of the main portion 14, and a piston 47. The normally closed TPRD device 42 operates between the vent conduit 39 and the vent end conduit 40.

The valve body 12 also has an inlet conduit 52, preferably partially obtained in the connection portion 16, having extension along an inlet axis J, parallel to the connection axis X and spaced therefrom. Preferably, moreover, an internally hollow outlet fitting 90, having extension along the inlet axis J, is applied to the valve body 12, which lengthens the inlet conduit 52, which therefore extends from an inlet end port 52a located at the end of the outlet fitting 90 to the inlet/outlet branch 28 of the main portion 14.

An electrically operable open/close valve 60 (SOV valve) operates between the inlet conduit 52 and the inlet/outlet branch 28, preferably by means of a solenoid 62 equipped with a socket 64 for power supply and signal transmission.

Specifically, the SOV valve comprises a shutter 65, for example made of polymeric material, suitable for at least partially closing the fluid connection between the inlet/outlet branch 28 and the inlet conduit 52. In particular, said shutter 65 operates on a shutter seat 66 between the inlet/outlet branch 28 and the inlet conduit 28. According to a variant embodiment, the shutter seat is made of a polymer material.

In addition, the OTV 4 valve comprises a temperature sensing device 70 (T-sensor device), comprising a protective cap 72, protruding axially from the head surface 17, and a temperature sensor 74, arranged inside the cap 72 and protruding from the head surface 17.

The OTV valve 4 further comprises a normally open flow limiting valve 94 (FL valve), operating along the inlet conduit 52, suitable for limiting the flow of hydrogen from the SOV valve 60 to the tank, i.e., to the inlet end port 52a, through the inlet conduit 52, so as to allow a small amount of the flow to pass through said flow limiting valve 94.

The term "limiting" therefore means that the flow limiting valve 94 does not completely close the inlet conduit 52, allowing the hydrogen to flow from the SOV valve 60 to the tank, i.e., in the refilling step, to pass through said flow-limiting valve 94.

In other words, the flow limiting valve 94, being partially open, does not completely close the passage of the flow through the inlet conduit 52 during the refilling step.

Preferably, moreover, an outlet filter 96 is placed along the outlet conduit 52, e.g., retained at the connection portion 16 by the outlet fitting 90. Preferably, the outlet filter 96 is placed downstream of the FL valve 94, taking into account the direction of the incoming flow from the tank, i.e., from the inlet end port 52a to the SOV valve 60.

Preferably, moreover, the OTV valve 4 comprises an excess flow valve 92 (EFV valve), which operates along inlet conduit 52 and is suitable for closing or limiting the passage of the flow of hydrogen from the tank (i.e., from the inlet end port 52a) to the SOV valve 60 if the rate of said flow exceeds a predetermined threshold value.

Said EFV valve 92 is placed upstream of the EF valve 94 taking into account the direction of the incoming flow from the tank, i.e., from the inlet end port 52a to the SOV valve 60.

The OTV valve 4 further comprises a non-return valve 98 (NRV valve) operating along the outlet conduit 32, which is normally closed and suitable for preventing the incoming flow of hydrogen from the tank towards the inlet/outlet conduit 26.

Preferably, the OTV valve comprises an ejector tube 100, attached to the head surface 17 of the connection portion 16 provided internally with an ejector conduit 102, which lengthens the outlet conduit 32.

Preferably, the NRV valve 98 is maintained applied to the connection portion 16 by the ejector tube 100, as well as, preferably, the cap 72 of the temperature sensing device 70.

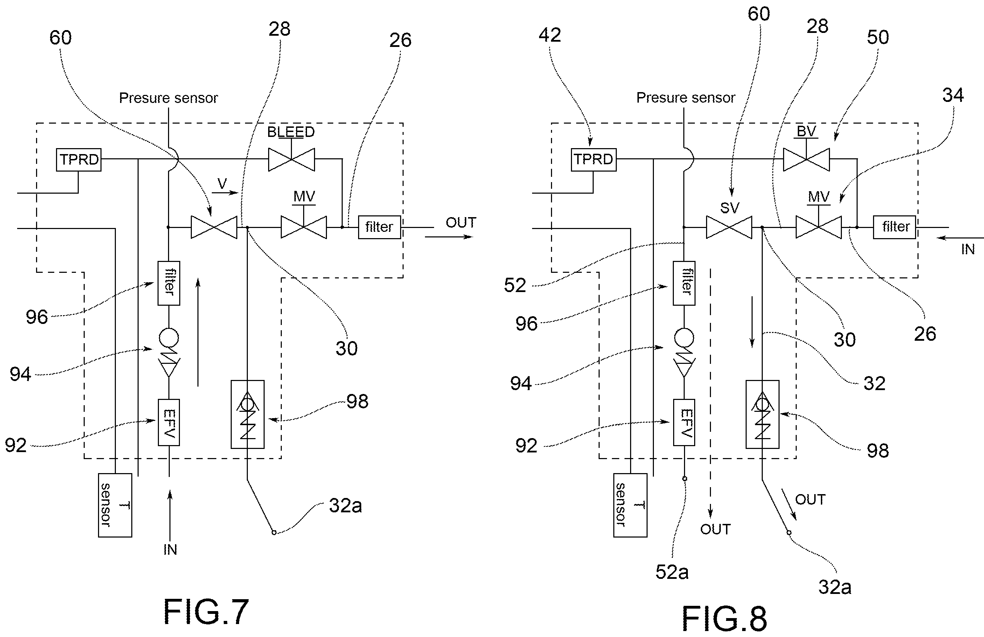

According to Fig. 8, which schematizes the OTV valve 4 during a refilling step, the hydrogen flow enters the inlet/outlet conduit 26 according to the IN direction. The MV valve is open and the BV valve is closed. The hydrogen flow, via the inlet/outlet branch 28, the inlet port 30, the outlet conduit 32, and the end outlet port 32a, enters the tank, refilling it.

However, some of the hydrogen flow hits the shutter 65 of the SOV valve 60, disengaging it from the shutter seat 66, passes into the inlet conduit 52 through the filter 96, if present, and strikes the FL valve 94, which passes from the open configuration to the closed configuration in which it limits the flow passing downstream.

Said flow finally passes through the EFV valve, which remains in the open configuration, to finally flow into the tank through the outlet end port 52a.

Advantageously, by virtue of the FL valve, the flow through the SOV valve 60 is however small, safeguarding the integrity of the components of the SOV valve 60, and in particular of the shutter 65 and/or of the shutter seat 66.

Advantageously, moreover, said FL valve does not completely close the passage of the flow in order to avoid vibrational phenomena.

According to a preferred embodiment, the FL valve 94 comprises an FL inlet 941 delimited by a fixed FL wall 943, an FL outlet 942, delimited by an FL seal 944 made of a polymer material, and a hollow FL shutter 945, extending from an inlet end 947 close to the FL inlet 941 to an outlet end 949 close to the FL outlet 942 and suitable for engaging tightly with said FL seal 944.

An FL passage 951 is also formed at the outlet end 949, which places the FL inlet 941 permanently in communication with the FL outlet 942 through the inner compartment of the FL shutter 945.

Preferably, the FL shutter 945 further comprises radial FL holes 953 at the outlet end 949.

The FL valve 94 further comprises a fixed FL spacer 955, in which the FL shutter 945 is axially movable, and an FL spring 957 operates between the FL spacer 955 and the FL inlet end 947 and is suitable for permanently biasing the FL shutter 945 toward the open configuration.

Said radial FL holes 953 place the inner compartment of the FL shutter 945 in communication with a chamber formed between the FL spacer 955 and the FL shutter 945.

When the hydrogen flow strikes the FL valve 94, said flow enters from the FL inlet 941, passes through the shutter 945, and pushes said shutter in abutment against the FL seal 944, overcoming the opposing action of the FL spring 957; a residual flow, significantly reduced, passes through the FL passage 951 and exits from the FL outlet 942.

The EFV valve 92 placed in series with the FL valve 94 is structurally identical to the FL valve 94 and shares the same FL seal 944 therewith.

According to Fig. 7, which schematizes the OTV valve 4 during a fueling step, i.e., feeding the hydrogen flow to the user devices arranged downstream of the OTV valve, the hydrogen flow enters the inlet conduit 52 according to the IN direction. The EFV valve 92 is open until the flow exceeds a threshold value, and the FL valve 94 is open. The flow thus hits the SOV valve 60, which is commanded to open for fueling, passes into the inlet/outlet branch 28 and then into the inlet/outlet conduit 26, then exits towards the user devices through the inlet/outlet port 20.

Passing through the outlet end port 32a the flow also hits the NRV valve 98, which passes into the closing configuration by the action of the pressure and the NRV spring 99. The flow also hits the NRV valve 98 through the inlet port 30, but the NRV valve 98 remains closed by virtue of the action of said NRV spring 99.

Innovatively, the OTV valve according to the present invention meets the needs of the industry in that it preserves the SOV valve components from excessive hydrogen flow rates during refueling.

It is clear that a person skilled in the art, in order to meet specific needs, may make changes to the OVT valve described above, all of which fall within the scope of protection defined in the following claims.

## Claims

1. A multifunction valve (4) for a high pressure hydrogen tank of an automotive fuel cell system, comprising:
- an inlet/outlet conduit (26) for the introduction of a hydrogen flow during a refilling step and the release of a hydrogen flow during a fueling step;
- an outlet conduit (32) ending with an end outlet port (32a) for supplying the flow to the tank during the refilling step;
- an inlet/outlet branch (28) branching off from the inlet/outlet conduit (26) and in communication with the outlet conduit (32) by means of an inlet port (30);
- an inlet conduit (52), suitable for being placed in communication with the inlet/outlet branch (28) and ending with an end inlet port (52a) for the introduction of the flow during the fueling step;
- an electrically operable opening/closing valve (60) or SOV valve, suitable for allowing the flow to pass from the inlet conduit (52) to the inlet/outlet branch (28) when operated during the fueling step;
- a non-return valve (98) or NRV valve, operating along the outlet conduit (32), suitable for preventing the incoming flow from passing from the tank towards the inlet/outlet conduit (26) during the fueling step;
said multifunction valve (4) being **characterized in that** it comprises
a flow limiting valve (94) or FL valve, arranged in series with the SOV valve (60) and suitable for limiting the flow from the SOV valve (60) towards the end inlet port (52a) during the refilling step, so as to allow a small amount of flow to pass through said flow limiting valve (94) during the refilling step.

2. A multifunction valve according to claim 1, wherein the FL valve (94) operates along the inlet conduit (52), downstream of the SOV valve (60) taking into account the flow direction during the refilling step.

3. A multifunction valve according to claim 1 or 2, wherein the SOV valve (60) comprises a shutter (65) made of a polymer material.

4. A multifunction valve according to any of the preceding claims, wherein the SOV valve (60) operates on a shutter seat (66) made of a polymer material.

5. A multifunction valve according to any of the preceding claims, wherein the FL valve (94) comprises:
- an FL inlet (941) delimited by a fixed FL wall (943), an FL outlet (942) delimited by an FL seal (944), a hollow FL shutter (945) extending from an inlet end (947) close to the FL inlet (941) to an outlet end (949) close to the FL outlet (942) and suitable for sealingly engaging said FL seal (944), and an FL passageway (951) obtained at the outlet end (949), which puts the FL inlet (941) and the FL outlet (942) permanently in communication, through the inner compartment of the FL shutter (945);
- an FL spring (957) suitable for permanently biasing the FL shutter (945) towards an open configuration.

6. A multifunction valve according to any of the preceding claims, comprising an outlet filter (96) in series with the FL valve (94).

7. A multifunction valve according to claim 6, wherein the outlet filter (96) is placed downstream of the FL valve (94) taking into account the direction of the incoming flow from the tank during the fueling step.

8. A multifunction valve according to any of the preceding claims, comprising an excess flow valve (92) or EFV valve, arranged in series at the FL valve (94), suitable for closing or limiting the incoming flow from the tank during the fueling step if the flow rate of said flow exceeds a preset threshold value.

9. A multifunction valve according to claim 8, wherein the EFV valve (92) is placed upstream of the EF valve (94) taking into account the direction of the incoming flow from the tank during the fueling step.

10. A multifunction valve according to claim 9, wherein the EFV valve (92) operates on a seal (944), said FL valve (94) also operating on the same seal (944).

## Patentansprüche

1. Multifunktionsventil (4) für einen Hochdruck-Wasserstofftank eines Kraftfahrzeug-Brennstoffzellensystems, umfassend:
- eine Einlass-/Auslassleitung (26) für die Einführung einer Wasserstoffströmung während eines Betankungsschritts und die Freisetzung einer Wasserstoffströmung während eines Kraftstoffzufuhrschritts;
- eine Auslassleitung (32), die mit einer Endauslassöffnung (32a) endet, um die Strömung während des Betankungsschritts dem Tank zuzuführen;
- eine Einlass-/Auslassabzweigung (28), die von der Einlass-/Auslassleitung (26) abzweigt und mit der Auslassleitung (32) mittels einer Einlassöffnung (30) in Verbindung steht;
- eine Einlassleitung (52), die dazu geeignet ist, mit der Einlass-/Auslassabzweigung (28) in Verbindung gesetzt zu werden, und die mit einer Endeinlassöffnung (52a) für die Einführung der Strömung während des Kraftstoffzufuhrschritts endet;
- ein elektrisch betätigbares Öffnungs-/Schließventil (60) oder SOV-Ventil, das dazu geeignet ist, den Durchgang der Strömung von der Einlassleitung (52) zur Einlass-/Auslassabzweigung (28) zu ermöglichen, wenn es während des Kraftstoffzufuhrschritts betätigt wird;
- ein Rückschlagventil (98) oder NRV-Ventil, das entlang der Auslassleitung (32) arbeitet und dazu geeignet ist, während des Kraftstoffzufuhrschritts zu verhindern, dass die eintretende Strömung vom Tank in Richtung der Einlass-/Auslassleitung (26) gelangt;
wobei das Multifunktionsventil (4) **dadurch gekennzeichnet ist, dass** es umfasst
ein Strömungsbegrenzungsventil (94) oder FL-Ventil, das in Reihe mit dem SOV-Ventil (60) angeordnet und dazu geeignet ist, die Strömung vom SOV-Ventil (60) in Richtung der Endeinlassöffnung (52a) während des Betankungsschritts zu begrenzen, um zu ermöglichen, dass eine kleine Strömungsmenge während des Betankungsschritts durch das Strömungsbegrenzungsventil (94) strömt.

2. Multifunktionsventil nach Anspruch 1, wobei das FL-Ventil (94) entlang der Einlassleitung (52) stromabwärts des SOV-Ventils (60) unter Berücksichtigung der Strömungsrichtung während des Betankungsschritts arbeitet.

3. Multifunktionsventil nach Anspruch 1 oder 2, wobei das SOV-Ventil (60) einen Verschluss (65) aus einem Polymermaterial umfasst.

4. Multifunktionsventil nach einem der vorhergehenden Ansprüche, wobei das SOV-Ventil (60) auf einem Verschlusssitz (66) aus einem Polymermaterial arbeitet.

5. Multifunktionsventil nach einem der vorhergehenden Ansprüche, wobei das FL-Ventil (94) umfasst:
- einen FL-Einlass (941), der durch eine feste FL-Wand (943) begrenzt ist, einen FL-Auslass (942), der durch eine FL-Dichtung (944) begrenzt ist, einen hohlen FL-Verschluss (945), der sich von einem Einlassende (947) nahe dem FL-Einlass (941) zu einem Auslassende (949) nahe dem FL-Auslass (942) erstreckt und dazu geeignet ist, dichtend mit der FL-Dichtung (944) in Eingriff zu kommen, und einen FL-Durchgang (951), der am Auslassende (949) erhalten wird, welcher den FL-Einlass (941) und den FL-Auslass (942) permanent durch den Innenraum des FL-Verschlusses (945) in Verbindung setzt;
- eine FL-Feder (957), die dazu geeignet ist, den FL-Verschluss (945) permanent in Richtung einer offenen Konfiguration vorzuspannen.

6. Multifunktionsventil nach einem der vorhergehenden Ansprüche, umfassend einen Auslassfilter (96) in Reihe mit dem FL-Ventil (94).

7. Multifunktionsventil nach Anspruch 6, wobei der Auslassfilter (96) stromabwärts des FL-Ventils (94) unter Berücksichtigung der Richtung der vom Tank eintretenden Strömung während des Kraftstoffzufuhrschritts angeordnet ist.

8. Multifunktionsventil nach einem der vorhergehenden Ansprüche, umfassend ein Durchflussbegrenzungsventil (92) oder EFV-Ventil, das in Reihe am FL-Ventil (94) angeordnet und dazu geeignet ist, die vom Tank eintretende Strömung während des Kraftstoffzufuhrschritts zu schließen oder zu begrenzen, wenn die Durchflussrate der Strömung einen voreingestellten Schwellenwert überschreitet.

9. Multifunktionsventil nach Anspruch 8, wobei das EFV-Ventil (92) stromaufwärts des FL-Ventils (94) unter Berücksichtigung der Richtung der vom Tank eintretenden Strömung während des Kraftstoffzufuhrschritts angeordnet ist.

10. Multifunktionsventil nach Anspruch 9, wobei das EFV-Ventil (92) auf einer Dichtung (944) arbeitet, wobei das FL-Ventil (94) ebenfalls auf derselben Dichtung (944) arbeitet.

## Revendications

1. Valve multifonction (4) pour un réservoir d'hydrogène à haute pression d'un système de pile à combustible automobile, comprenant :
- un conduit d'entrée/sortie (26) pour l'introduction d'un flux d'hydrogène lors d'une étape de remplissage et la libération d'un flux d'hydrogène lors d'une étape de ravitaillement en carburant ;
- un conduit de sortie (32) se terminant par un orifice de sortie d'extrémité (32a) pour fournir le flux au réservoir pendant l'étape de remplissage ;
- une branche d'entrée/sortie (28) dérivant du conduit d'entrée/sortie (26) et en communication avec le conduit de sortie (32) au moyen d'un orifice d'entrée (30) ;
- un conduit d'entrée (52), apte à être mis en communication avec la branche d'entrée/sortie (28) et se terminant par un orifice d'entrée d'extrémité (52a) pour l'introduction du flux pendant l'étape de ravitaillement en carburant ;
- une valve d'ouverture/fermeture à commande électrique (60) ou valve SOV, appropriée pour permettre au flux de passer du conduit d'entrée (52) à la branche d'entrée/sortie (28) lorsqu'elle est actionnée pendant l'étape de ravitaillement en carburant ;
- un clapet anti-retour (98) ou valve NRV, fonctionnant le long du conduit de sortie (32), adapté pour empêcher le flux entrant de passer du réservoir vers le conduit d'entrée/sortie (26) pendant l'étape de ravitaillement en carburant ;
ladite valve multifonction (4) étant **caractérisée en ce qu'**elle comprend
une valve de limitation de flux (94) ou valve FL, disposée en série avec la valve SOV (60) et appropriée pour limiter le flux de la valve SOV (60) vers l'orifice d'entrée d'extrémité (52a) pendant l'étape de remplissage, de manière à permettre à une petite quantité de flux de passer à travers ladite valve de limitation de flux (94) pendant l'étape de remplissage.

2. Valve multifonction selon la revendication 1, dans laquelle la valve FL (94) fonctionne le long du conduit d'entrée (52), en aval de la valve SOV (60) en tenant compte du sens d'écoulement pendant l'étape de remplissage.

3. Valve multifonction selon la revendication 1 ou 2, dans laquelle la valve SOV (60) comprend un obturateur (65) en matériau polymère.

4. Valve multifonction selon l'une quelconque des revendications précédentes, dans laquelle la valve SOV (60) fonctionne sur un siège d'obturateur (66) en matériau polymère.

5. Valve multifonction selon l'une quelconque des revendications précédentes, dans laquelle la valve FL (94) comprend :
- une entrée FL (941) délimitée par une paroi FL fixe (943), une sortie FL (942) délimitée par un joint FL (944), un obturateur FL creux (945) s'étendant d'une extrémité d'entrée (947) proche de l'entrée FL (941) à une extrémité de sortie (949) proche de la sortie FL (942) et apte à engager de manière étanche ledit joint FL (944), et un passage FL (951) obtenu à l'extrémité de sortie (949), qui met en communication permanente l'entrée FL (941) et la sortie FL (942), à travers le compartiment intérieur de l'obturateur FL (945) ;
- un ressort FL (957) adapté pour solliciter en permanence l'obturateur FL (945) vers une configuration ouverte.

6. Valve multifonction selon l'une quelconque des revendications précédentes, comprenant un filtre de sortie (96) en série avec la valve FL (94).

7. Valve multifonction selon la revendication 6, dans laquelle le filtre de sortie (96) est placé en aval de la valve FL (94) en tenant compte de la direction du flux entrant provenant du réservoir pendant l'étape de ravitaillement en carburant.

8. Valve multifonction selon l'une quelconque des revendications précédentes, comprenant une valve de limitation de flux (92) ou valve EFV, disposée en série au niveau de la valve FL (94), appropriée pour fermer ou limiter le flux entrant provenant du réservoir pendant l'étape de ravitaillement en carburant si le débit dudit flux dépasse une valeur seuil prédéfinie.

9. Valve multifonction selon la revendication 8, dans laquelle la valve EFV (92) est placée en amont de la valve FL (94) en tenant compte du sens du flux entrant provenant du réservoir pendant l'étape de ravitaillement en carburant.

10. Valve multifonction selon la revendication 9, dans laquelle la valve EFV (92) fonctionne sur un joint d'étanchéité (944), ladite valve FL (94) fonctionnant également sur le même joint d'étanchéité (944).
